# EUROPÄISCHE PATENTSCHRIFT

(11) **EP 0 937 372 B1**
(45) Veröffentlichungstag und Bekanntmachung des Hinweises auf die Patenterteilung: **22.08.2001**
(21) Anmeldenummer: 97950133.5
(22) Anmeldetag: 06.11.1997
(51) Int. Cl.: H05B 3/14, H05B 3/34, H05K 9/00

(54) **ELEKTRISCH ERWÄRMBARE VORRICHTUNG**
ELECTRICALLY HEATABLE DEVICE
DISPOSITIF DE CHAUFFAGE ELECTRIQUE

(30) Priorität: 06.11.1996 DE 29619279 U
(43) Veröffentlichungstag der Anmeldung: 25.08.1999
(73) Patentinhaber: Beckmann Versand GmbH, 82481 Mittenwald (DE)
(72) Erfinder: BECKMANN, Rolf, D-80809 München (DE)
(74) Vertreter: Leitner, Waldemar, Dr. techn.
(86) Internationale Anmeldenummer: EP9706166
(87) Internationale Veröffentlichungsnummer: WO9820711

(56) Entgegenhaltungen:
- EP-A- 0 030 479
- EP-A- 0 383 152
- AT-A- 389 026
- DE-A- 1 565 026
- DE-A- 3 207 014
- DE-A- 4 104 038
- DE-U- 1 803 233

## Beschreibung

Die Erfindung betrifft eine elektrisch erwärmbare Vorrichtung, insbesondere ein Heizkissen, eine Heizdecke oder eine Heizmatte, mit einem an eine Wechselstromquelle anschließbaren Heizleiter, der allseitig von einer gegenüber diesem isolierten leitenden und an Masse (Erde) anschließbaren Schicht umgeben ist, die ihrerseits von einer äußeren Hülle, vorzugsweise einem Bezug aus textilem Material, eingefaßt ist.

Elektrisch erwärmbare Vorrichtungen, wie Heizkissen, Heizdecken oder Heizmatten, weisen üblicherweise eine allseitig geschlossene, feuchtigkeitsdichte schmiegsame Hülle mit einem Stoffbezug auf. Im Inneren der Vorrichtung befindet sich ein stromführender Heizleiter, der mit einer geeigneten schützenden Ummantelung versehen ist. Weiterhin sind derartige Vorrichtungen mit Einrichtungen zur Regelung der Temperatur und zur Sicherung gegen Überhitzung versehen. Bei derartigen elektrisch erwärmbaren Vorrichtungen und insbesondere Heizkissen strahlen die stromführenden Heizleiter ein starkes elektrisches Wechselfeld ab. Elektrische Wechselfelder, insbesondere auch niederfrequente elektrische Wechselfelder, haben die Gesundheit beeinträchtigende Wirkungen, die bei vielen Menschen zu erheblichen Gesundheitsproblemen führen können. Die gesundheitsschädigende Wirkung von elektrischen Wechselfeldern wurde bisher viel zu wenig beachtet und wird häufig ignoriert, ohne Personen, die derartigen Wechselfeldern ausgesetzt sind, über die schädlichen Wirkungen derartiger Wechselfelder aufzuklären.

Aus dem DE-GM 18 03 233 ist eine Vorrichtung der eingangs angegebenen Art bekannt, bei der die den Heizleiter umgebende und an Erde anschließbare Schicht aus einem Drahtgewebe oder einem Drahtnetz besteht. Dieses Drahtgewebe oder Drahtnetz soll den Benutzer der Vorrichtung gegen das Auftreten von Berührungsspannungen gegen Erde schützen, und zwar insbesondere bei einer Zerstörung der Isolation oder bei einer Durchfeuchtung der Vorrichtung. Weiterhin soll das Drahtgewebe oder Drahtnetz den Benutzer vor Aufladungen schützen, da die geerdete leitende Schicht kein Spannungspotential gegenüber dem Benutzer hat.

Aus der DE-OS 15 65 026 ist ein Heizelement für ein elektrisch beheizbares Gerät bekannt, das aus einer Textilbahn besteht, die auf mindestens einer Seite mit einem elektrisch leitenden Überzug aus Silikonkautschuk oder einem Polymerisationswerkstoff bedeckt ist und mindestens zwei sich längs erstreckende metallische Leiter aufweist, die parallel und im Abstand zueinander in enger Verbindung mit der elektrisch leitenden Schicht auf der Textilbahn angebracht sind, so daß ein beispielsweise mit diesem Heizelement versehenes Heizkissen gegen Feuersgefahr oder die Gefahr einer Sach- und Personenbeschädigung aufgrund einer mechanischen Beanspruchung, elektrischen Überlastung, Feuchtigkeit oder Überhitzung einer schadhaft gewordenen Isolation geschützt ist.

Aus dem DE-GM 89 01 603 ist ein schmiegsames Elektrowärmegerät, beispielsweise ein Heizkissen, bekannt, das wenigstens einen Heizleiter aufweist, der aus einem zu einer Heizkordel zusammengefaßten Hin- und Rückleiter besteht, wobei die zu beheizende Fläche mit einer Folie bedeckt werden kann, die metallische Anteile enthält oder aus einem Textil mit elektrisch leitenden Fasern oder aus einem Drahtnetz oder aus einem mit einer metallischen Beschichtung versehenen Träger besteht, um auf den menschlichen Organismus wirkende Störfelder auszuschalten. Die Herstellung derartiger elektrisch leitender Folien oder von Trägern mit Metallbeschichtungen ist verhältnismäßig aufwendig und derartige Folien und metallbeschichtete Träger sind darüberhinaus schlecht zu verarbeiten.

Aufgabe der Erfindung ist es daher, eine elektrisch erwärmbare Vorrichtung der eingangs angegebenen Art zu schaffen, die sich in einfacher und dem besonderen Verwendungszweck angepaßter Weise mit einer gesundheitsschädliche elektrische Wechselfelder verhindernden, elektrisch leitenden Schicht versehen läßt.

Erfindungsgemäß wird diese Aufgabe dadurch gelöst, daß die leitende Schicht aus einer Umhüllung aus einem Gewebe, Gewirke, Faservlies und/oder Filz aus nicht leitendem Material besteht, das nachträglich eingebrachtes Graphit enthält.

Da bei der erfindungsgemäßen Vorrichtung die leitende, die Umhüllung bildende Schicht aus einem Gewebe, einem Gewirke, einem Faservlies oder einem Filz oder einem anderen textilem Material besteht, läßt sich diese leicht und kostengünstig herstellen. Die Schicht ist gut verformbar und weist eine gute Flexibilität auf. Die Schicht wird erfindungsgemäß auf einfache Weise dadurch elektrisch leitend gemacht, daß in diese nachträglich Graphit eingebracht wird. Dieses Einbringen kann in üblicher Weise durch Imprägnieren mit Graphit erfolgen.

Die erfindungsgemäße Vorrichtung gewährleistet eine wirksame Abschirmung gegen von den stromführenden Heizleiter verursachte elektrische Wechselfelder. Weiterhin gewährt die geerdete Umhüllung eine zusätzliche Sicherheit für den Fall, daß ein Abschnitt des stromführenden Heizleiters aus seiner isolierenden Umwicklung oder Ummantelung beispielsweise im Falle eines Bruches oder Risses austritt. In diesem Falle kommt der Heizleiterabschnitt zunächst mit der elektrisch umleitenden Umhüllung in Berührung, so daß der Strom über Masse abfließen kann, ohne den Benutzer zu gefährden.

Auch vorhandene Vorrichtungen, wie Heizkissen, lassen sich erfindungsgemäß in einfacher Weise dadurch nachrüsten, daß die ein elektrisches Wechselfeld abschirmende elektrisch leitende Umhüllung nachträglich eingebracht wird.

Die elektrisch leitende Umhüllung kann auch auf die Innenseite der äußeren Hülle bzw. des äußeren Bezuges aufgebracht sein.

Besonders vorteilhaft ist es, wenn die elektrisch leitende Umhüllung als allseitig geschlossene Struktur ausgebildet ist. Damit wird eine besonders sichere und gleichmäßig wärmeabsorbierende Umhüllung geschaffen.

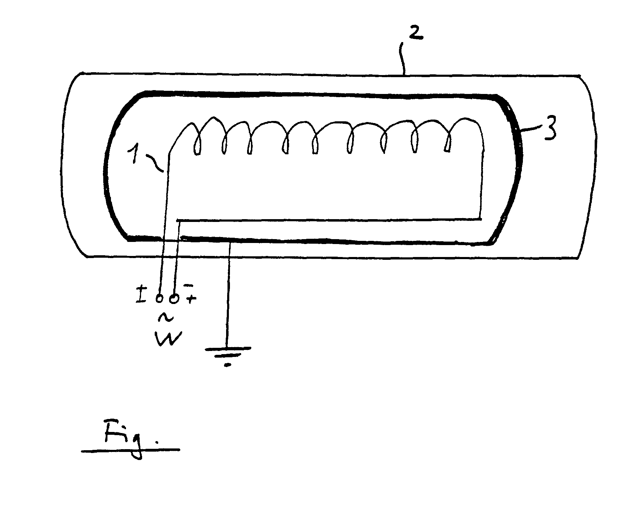

Ein Ausführungsbeispiel der Erfindung wird nachstehend anhand der Zeichnung näher erläutert, in deren einziger Figur ein schematischer Schnitt durch die elektrisch erwärmbare Vorrichtung dargestellt ist.

Das dargestellte Heizkissen weist einen schematisch dargestellten Heizleiter 1 auf, der an einer Wechselstromquelle W anschließbar ist. Der Heizleiter kann beispielsweise eine Anzahl paralleler Drähte aufweisen, die jeweils mit einer Eingangs- bzw. einer Ausgangsstromleiste verbunden sind. Es ist aber auch möglich, einen Heizdraht rohrschlangenartig durch das gesamte Heizkissen zu führen. Bei Anlegen einer Wechselspannung fließt durch den Heizleiter ein elektrischer Strom. Der Heizleiter ist mit einer (nicht dargestellten) wärmeresistenten und isolierenden Ummantelung bzw. Umwicklung umgeben.

Das dargestellte Heizkissen weist ferner eine äußere Hülle 2 auf. Bei dieser Hülle handelt es sich in der Regel um eine allseitig geschlossene, feuchtigkeitsdichte und schmiegsame Hülle mit einem Stoffbezug für einen physiologisch verträglichen Hautkontakt.

Zwischen äußerer Hülle 2 und Heizleiter 1 ist eine elektrisch leitende innere Umhüllung 3, welche gegenüber dem stromführenden Heizleiter 1 elektrisch isoliert und an Masse angeschlossen ist, ausgebildet. Im dargestellten Ausführungsbeispiel ist diese innere Umhüllung ebenfalls allseitig geschlossen ausgebildet. Der in der Figur dargestellte Zwischenraum zwischen äußerer Hülle 2 und innerer Umhüllung 3 dient nur zur Anschauung. In der Regel werden äußere Hülle 2 und Umhüllung 3 direkt aufeinander aufliegen bzw. als Verbund ausgebildet sein, wobei hierbei die innere Umhüllung 3 auf der Innenseite der äußeren Hülle 2 aufgebracht ist.

Ein bevorzugtes Material für die innere Umhüllung 3 ist ein graphitgetränktes Faservlies, welches leicht verarbeitbar ist und beispielsweise gegen Knicken sehr unempfindlich ist.

Wird nun das Heizkissen bzw. der Heizleiter 1 an eine Wechselspannung W angeschlossen, fließt ein Strom durch den Heizleiter 1. Hierdurch wird um den Heizleiter 1 ein elektrisches Wechselfeld erzeugt, welches nach außen abstrahlt. Durch die Ausbildung der elektrisch leitenden, und mit Masse verbundenen Umhüllung 3 wird bewirkt, daß die elektrischen Feldlinien auf der inneren Oberfläche der Umhüllung 3 enden. Somit ist wirksam verhindert, daß elektrische Strahlung in die Umgebung gelangt.

Die erfindungsgemäße Vorrichtung läßt sich mit einem herkömmlichen dreiadrigen Schutzkontaktkabel realisieren. Hierbei wird der Heizleiter 1 mit den stromführenden Adern verbunden, und die innere Umhüllung 3 an Masse angeschlossen.

Erfindungsgemäß ist es auch möglich, herkömmliche Heizkissen, welche nicht mit der erfindungsgemäßen Abschirmung bzw. inneren Umhüllung 3 ausgebildet sind, umzurüsten. Hierzu wird ein herkömmliches Heizkissen in eine elektrisch leitende Umhüllung eingebracht, welche an Masse bzw. Erde anschließbar ist. Wenn das für diese elektrisch leitende Umhüllung verwendete Material nicht physiologisch verträglich ist, wird die Umhüllung in vorteilhafter Weise in eine weitere, physiologisch verträgliche Umhüllung eingebracht. Es ist gleichfalls möglich, die elektrisch leitende Struktur auf der Innenseite eines außenseitig physiologisch verträglichen Materials auszubilden.

## Patentansprüche

1. Elektrisch erwärmbare Vorrichtung, insbesondere Heizkissen, Heizdecke oder Heizmatte, mit einem an eine Wechselstromquelle anschließbaren Heizleiter (1), einer gegenüber diesem isolierten leitenden Schicht (3), und einer äußeren Hülle (2), vorzugsweise einem Bezug aus textilem Material, die die leitende Schicht (3) einfaßt,
**dadurch gekennzeichnet,**
daß die leitende Schicht eine den Heizleiter (1) allseitig umgebende Umhüllung (3) bildet,
daß die leitende Schicht aus einem Gewebe, Gewirke, Faserflies und/oder Filz aus nicht leitendem Material, das nachträglich eingebrachtes Graphit enthält, besteht und
daß die leitende Schicht an Masse ( Erde ) angeschlossen ist.

2. Vorrichtung nach Anspruch 1, dadurch gekennzeichnet, daß die Umhüllung (3) mit Graphit imprägniert ist.

3. Vorrichtung nach Anspruch 1 oder 2, dadurch gekennzeichnet, daß die elektrisch leitende Umhüllung (3) auf die Hülle (2) aufgebracht ist.

4. Vorrichtung nach einem der Ansprüche 1 bis 3, dadurch gekennzeichnet, daß die elektrisch leitende Umhüllung (3) als allseitig geschlossene Struktur ausgebildet ist.

## Claims

1. Electrically heatable device, particularly an electric cushion, an electric blanket or an electric mat, with a heating conductor (1) which can be connected to an A.C. supply, a conductive layer (3) insulated from the heating conductor, and an outer envelope (2), preferably a cover made of a textile fabric, which encloses the conductive layer (3),
characterised in that
the conductive layer forms an envelope (3) surrounding the heating conductor (1) on all sides,
the conductive layer consists of a woven fabric, knitted fabric, fibre tissue and/or felt made of a non-conductive material containing graphite which is added subsequently, and
that the conductive layer is earthed.

2. Device according to claim 1, characterised in that the envelope (3) is impregnated with graphite.

3. Device according to claim 1 or 2, characterised in that the electrically conductive envelope (3) is fitted to envelope (2).

4. Device according to one of claims 1 to 3, characterised in that the electrically conductive envelope (3) forms a structure which is enclosed on all sides.

## Revendications

1. Dispositif de chauffage électrique, notamment coussin chauffant, couverture chauffante ou tapis chauffant, comportant un conducteur chauffant (1) pouvant être raccordé à une source de courant alternatif, une couche (3) conductrice isolée par rapport au conducteur chauffant, et une enveloppe extérieure (2) de préférence une housse en matière textile qui renferme la couche conductrice (3),
**caractérisé en ce que**
la couche conductrice forme une enveloppe (3) entourant de tous côtés le conducteur chauffant (1),
que la couche conductrice consiste en un tissu, un tricot, un non-tissé et/ou un feutre en matériau non-conducteur qui comporte du graphite intégré après-coup, et
que la couche conductrice est mise à la masse (terre).

2. Dispositif selon la revendication 1, caractérisé en ce que l'enveloppe (3) est imprégnée de graphite.

3. Dispositif selon les revendications 1 ou 2, caractérisé en ce que l'enveloppe électriquement conductrice (3) est appliquée sur l'enveloppe (2).

4. Dispositif selon l'une quelconque des revendications 1 à 3, caractérisé en ce que l'enveloppe électriquement conductrice (3) est formée comme structure fermée de tous côtés.
